# EUROPEAN PATENT APPLICATION

(11) **EP 1 258 416 A2**
(43) Date of publication of application: **20.11.2002**
(21) Application number: 02007589.1
(22) Date of filing: 03.04.2002
(51) Int. Cl.: B62D 25/04, B62D 25/02

(54) **Production method for separated repair parts for body panel**

(30) Priority: 15.05.2001 JP 2001145520
(71) Applicant: Honda Giken Kogyo Kabushiki Kaisha, Minato-ku, Tokyo 107-0062 (JP)
(72) Inventor: Handa, Akira, Minato-ku, Tokyo 107-0062 (JP)
(74) Representative: Prechtel, Jörg, Dipl.-Phys. Dr.

(57) **Abstract**

A side outer panel that is a body panel is separated into a body front side section (10), a body rear side section (11) and a side sill section (12). These separated repair parts are produced using local molds produced to correspond to each part. The local molds are produced only when the mold cost is lower than the lost material cost in the case where the divided repair parts are produced by directly cutting from the body panel.

## Description

### BACKGROUND OF THE INVENTION

### 1. Field of the Invention

The present invention relates to a method for producing separated repair parts corresponding to a section obtained by separating part of a body panel after the body is assembled in vehicles for which a body is assembled using a body panel which has been integrally molded in advance.

### 2. Description of the Prior Art

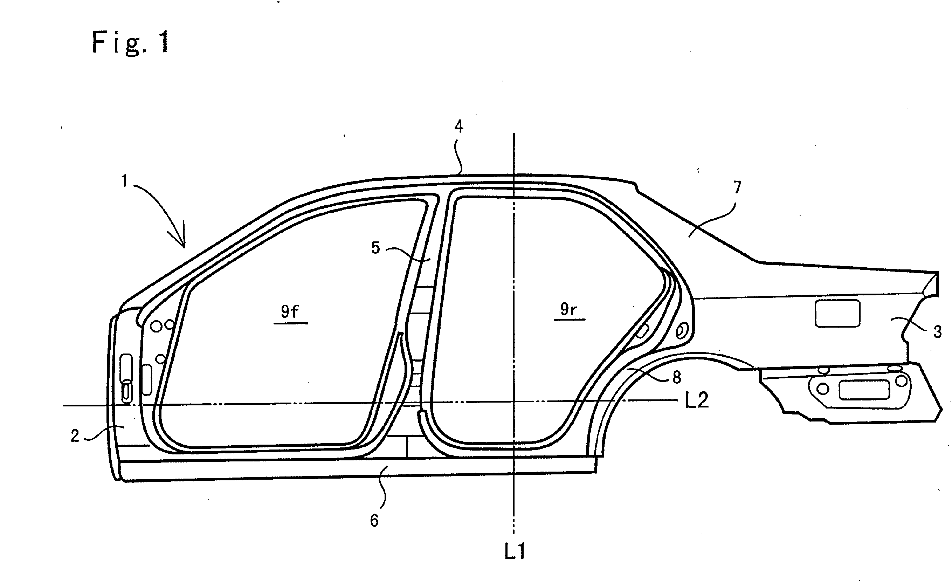

In assembling a body, as shown in Fig. 1, there is the case where an outer side panel 1 that is the outside of a side panel which forms a side section of a body is integrally molded extending from a hinge section 2 of a front door to a trunk side section 3. In the body with such an outer side panel 1, when only part of the outer side panel 1 need repairs after assembling the body, a separated repair part obtained by separating a predetermined section from the outer side panel 1 has been provided.

Without providing such a side outer panel 1, it is known that the entire part corresponding to the side outer panel 1 is composed of separated plural parts and these are welded to assemble a body (e.g. refer to Japanese Unexamined Patent Publication No. HEI 7-132853 and Japanese Unexamined Patent Publication No. HEI 10-264849). In this case, it is not necessary to provide the repair parts by separating them from the outer side panel 1 because it is enough if the individual repair parts are provided separately in advance.

Since the outer side panel 1 is a large part, when the separated repair parts are made from the outer side panel 1 as described above, the remaining parts are scrapped and as a result, material loss becomes extremely large. Further, if the outer side panel 1 must be stored to provide the separated repair parts, it is necessary to provide an extremely large storage space and as a result, this is a considerable burden.

Further, it is impossible to manufacture adjacent parts from one sheet of the outer side panel 1 as a plurality of separated repair parts because the welding overlap width cannot be secured. Accordingly, it is only possible to manufacture one separated repair part from one sheet of the outer side panel 1.

It is therefore an object of the present invention to provide a method for advantageously producing separated repair parts for a large body panel such as an outer side panel 1 that is integrally molded

### SUMMARY OF THE INVENTION

To solve the above-mentioned problems, a method for producing separated repair parts for a body panel according to the present invention is provided, in which part of the body panel which is integrally formed to provide a body is produced as separated repair parts, the method comprising the steps of providing local molds corresponding to the separated repair parts and producing the separated repair parts using the local molds.

In this case, it is desirable that the local mold be made only when the mold cost for the local mold is less than the lost material cost in the case where the separated repair parts are divided from the body panel. Further, the body panel is an outer side panel integrally molded from a hinge section of a front door to a trunk side section, wherein the separated repair parts can also be made to include any of a body front side section extending from the hinge section of the front door to the rear section of a center pillar, a body rear side section extending from the rear section of the center pillar to the trunk side section, and a side sill section forming the bottom section of the passenger compartment entrance.

According to the present invention, a local mold forming a part corresponding to part of a body panel is provided. By molding separated repair parts using the local molds, it is unnecessary to separate the separated repair parts from the body panel and it is possible to remarkably reduce material loss. In addition, since it is not necessary to store a large body panel, storage becomes easier.

If the local mold is provided only when the mold cost is less than the lost material cost, it is possible to provide the separated repair parts at a low cost.

Further, if the body panel is an outer side panel and the separated repair parts include any of the body front side section, the body rear side section or the side sill section of the outer side panel, it is possible to provide frequently used parts at low cost.

### BRIEF DESCRIPTION OF THE DRAWINGS

Fig. 1 is a view showing a body panel that is an object of the present embodiment;
Fig. 2 is a view showing separated repair parts according to the present embodiment; and
Fig. 3 is a view showing other separated repair parts.

### DETAILED DESCRIPTION OF THE PREFERRED EMBODIMENTS

One embodiments of the present invention will now be described with reference to the accompanying drawings. Fig. 1 shows an outer side panel 1 that is a body panel of the present embodiment. As described above, the outer side panel 1 is a large panel integrally press-molded extending from a hinge section 2 to a trunk side section 3. Reference numeral 4 is a roof side, reference numeral 5 is a center pillar, 6 is a side sill, 7 is a rear pillar, and 8 is a rear fender. The center pillar 5 divides a passenger compartment entrance into a front cabin 9f side and a rear cabin 9r side and is provided with a hinge section for a rear door.

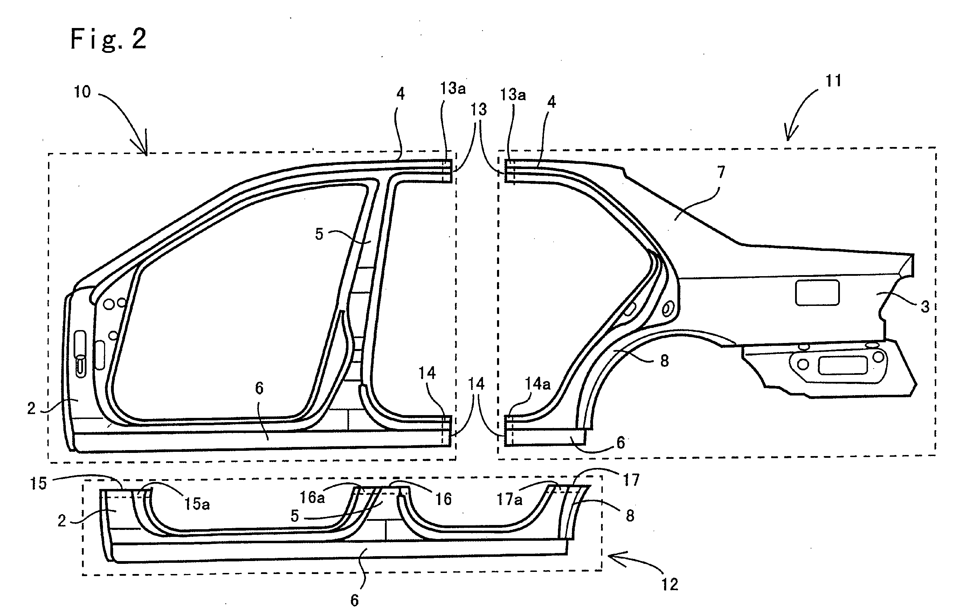

Fig. 2 shows separated repair parts provided in this embodiment which consist of a body front side section 10, a body rear side section 11, and a side sill section 12. These body front side section 10, body rear side section 11 and side sill section 12 are determined by a demand number which is the number of sections required for repair of the body or the like after assembling vehicles.

The demand number varies with the type of car, but there is, for example, a case where the ratio of the body front side section 10 to the body rear side section 11 is 10 ∼ 20% : 90 ∼ 80% (accordingly, the difference of a ratio between the body front side section 10 and the body rear side section 11 becomes about 90% ∼ 80%). There is not a big difference between the right and left sides of the body and they show a similar tendency. It is desirable that the separated repair parts be separated in such a large demand difference section.

In the present embodiment, a parting line L1 shown in Fig. 1 divides the side outer panel 1 into the body front side section 10 and the body rear side section 11 and a parting line L2 divides the side sill 12. The side sill 12 is a section including the side sill 6 forming an entrance bottom section for the front and rear passenger compartments.

Reference numerals 13 and 14 of Fig. 2 are separated sections of the roof side 4 and the side sill 6 separated along the parting line L1. On the other hand, reference numerals 15, 16 and 17 are separated sections of the hinge section 2, the center pillar 5, and the rear fender 8 separated along the parting line L2. However, these separated sections 13 ∼ 17 are not provided by simply dividing the side outer panel 1, but are provided with a jointing overlap width for welding. Reference numerals 13a, 14a, 15a, 16a and 17a signify a welding overlap width for each separated section and have a longer projection than the original measurement of each separated section so that each separated section can overlap the other by a predetermined amount.

The body front side section 10, body rear side section 11 and side sill section 12 are formed by press molding using local molds (not shown) which are separately provided. The local molds are provided only when the mold cost is less than the lost material cost. Namely, when the body front side section 10 is produced, use of local molds is determined by comparing the mold cost of the local mold for the body front side section 10 with the lost material cost from scrapping the body rear side section 11 when the body front side section 10 is produced by cutting from the side outer panel 1.

In this manner, since the local mold is made only when the mold cost is lower than the lost material cost, it is possible to produce the corresponding separated repair parts at a lower cost than when the separated repair parts are separated from the side outer panel 1. The local mold is not provided when the mold cost is higher than the lost material cost. In this case, it is more advantageous to produce the separated repair parts by separating from the side outer panel 1.

When such a local mold is produced, since the loss of a raw panel is reduced and a press-molding machine becomes compact, this is advantageous in production. It is also obvious that the material loss in the case where the divided repair parts are press-molded from a comparatively small raw panel corresponding to the local mold becomes less than the material loss in the case where the side outer panel 1 is press-molded from a raw panel.

Further, when the body front side section 10 and the body rear side section 11 are produced, since they are adjacent parts, it is only possible to produce either the body front side section 10 or the body rear side section 11 for the purpose of securing the jointing overlap width 13a and 14a when they are produced by separating from the side outer panel 1. However, according to the present embodiment, since a local mold is produced for each of them, it is possible to efficiently manufacture both the body front side section 10 and the body rear side section 11.

Further, when the body front side section 10, the body rear side section 11 and the side sill section 12 are provided, the side sill section 12 overlaps the body front side section 10 and the body rear side section 11. Accordingly, it is not possible to separate the body front side section 10, the body rear side section 11 and the side sill section 12 from one sheet of an outer side panel 1. However, according to the present embodiment, it is possible to produce each of them without any waste.

Since it is no longer necessary to store the large side outer panel 1 itself in case of receiving an order for the separated repair parts, it is easier to store the separated repair parts.

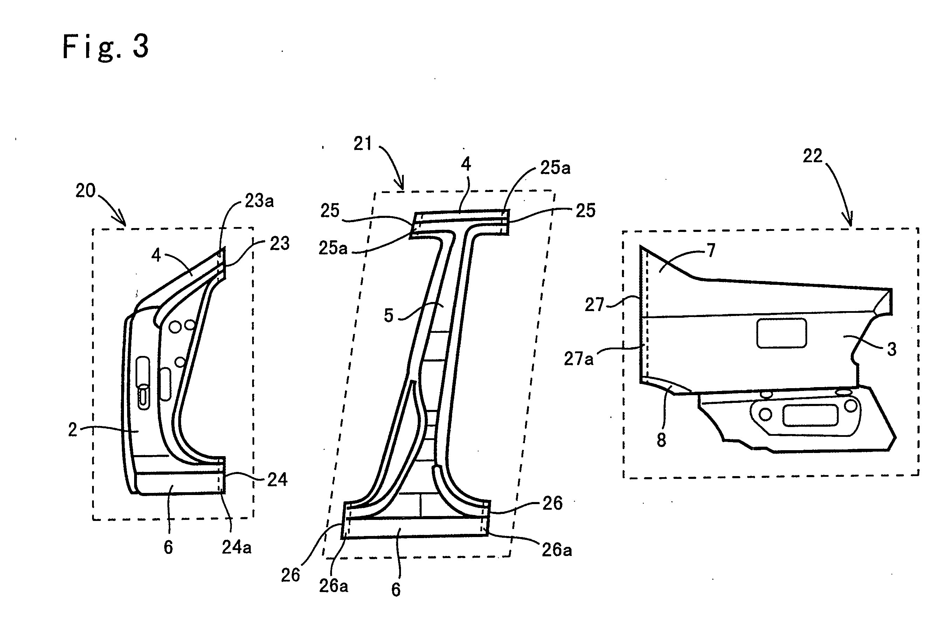

Fig. 3 shows another example of separated repair parts. The body front side section 10 is further divided into a front side hinge neighboring section 20 and a center pillar neighboring section 21 of a center pillar 5 section and a body rear side section 11 is also divided into a trunk neighboring section 22 including a trunk side section 3 and each part of a rear pillar 7 and a rear fender 8. Reference numerals 23, 24, 25, 26 and 27 are separated sections, while reference numerals 23a, 24a, 25a, 26a and 27a are the welding overlap width for each separated section.

It is also possible to optionally produce such a small divided repair part. In this case, a local mold is provided when it is advantageous as a result of the demand number and comparison of the mold cost with the lost material cost.

It is to be noted that the present invention is not limited to the side outer panel 1, but can be applied to any body panel as far as the panel is comparatively large and is integrally molded during production of a body. It is also possible to change the separating method depending on the demand.

A side outer panel that is a body panel is separated into a body front side section (10), a body rear side section (11) and a side sill section (12). These separated repair parts are produced using local molds produced to correspond to each part. The local molds are produced only when the mold cost is lower than the lost material cost in the case where the divided repair parts are produced by directly cutting from the body panel.

## Claims

1. A method for producing separated repair parts for a body panel in which part of the body panel which is integrally formed to provide a body is produced as separated repair parts, comprising the steps of providing local molds corresponding to the separated repair parts and producing the separated repair parts using the local molds.

2. The method for producing separated repair parts for a body panel according to claim 1, wherein the local mold is formed only when the mold cost of the local mold is lower than the lost material cost in the case where the separated repair parts are removed from the body panel.

3. The method for producing separated repair parts for a body panel according to claim 1, wherein the body panel is an outer side panel integrally molded extending from a hinge section of a front door to a trunk side section, and the separated repair parts include any of a body front side section extending from the hinge section of the front door to the rear section of a center pillar, a body rear side section extending from the rear section of the center pillar to the trunk side section, and a side sill section forming a bottom section of a cabin entrance.
